# EUROPÄISCHE PATENTSCHRIFT

(11) **EP 0 625 670 B1**
(45) Veröffentlichungstag und Bekanntmachung des Hinweises auf die Patenterteilung: **16.10.1996**
(21) Anmeldenummer: 94102608.0
(22) Anmeldetag: 22.02.1994
(51) Int. Cl.: F16L 55/12, F16K 7/10

(54) **Einrichtung zum Absperren einer Rohrleitung**
Device for closing a pipeline
Dispositif pour l'obturation d'une conduite

(30) Priorität: 10.05.1993 DE 4315417
(43) Veröffentlichungstag der Anmeldung: 23.11.1994
(73) Patentinhaber: Haro, Jürgen, D-37627 Stadtoldendorf (DE)
(72) Erfinder: Haro, Jürgen, D-37627 Stadtoldendorf (DE)
(74) Vertreter: Lins, Edgar, Dipl.-Phys. Dr.jur.

(56) Entgegenhaltungen:
- WO-A-92/01888
- DE-C- 626 654
- US-A- 2 598 207
- US-A- 3 320 750
- US-A- 5 170 986

## Beschreibung

Die Erfindung betrifft eine Einrichtung für eine stationäre Montage in einer Rohrleitung zum zumindest flüssigkeitsdichten Absperren der Rohrleitung gemäß dem Obergriff von Anspruch 1.

Derartige Einrichtungen sind insbesondere für Abwasser-Kanalsysteme bekannt, die zeitweilig gegen das Eindringen von gefährlichen Flüssigkeiten geschützt werden müssen. Die Gefahr einer derartigen Einleitung von gefährlichen Flüssigkeiten besteht beispielsweise durch Unfälle beim Befüllen von Tankwagen im Bereich der Kanalisation oder im normalen Straßenverkehr. Zeitweilig müssen Kanalsysteme auch bei Bauarbeiten oder Reinigungsarbeiten geschlossen werden. Aus ähnlichen Gründen besteht auch in Produktionsanlagen das Bedürfnis, Wasserrohre durch Ventile zu verschließen.

Die dabei verwendeten Ventile sind meist Klappen, die beim Bau des Rohrsystems an einem festen Platz eingebaut sind und mechanisch wirken. Es ist aber auch bekannt, aufblasbare Ventile aus flexiblen Gummi, also aufblasbare Kissen, zu verwenden, die bei geringem Gegendruck Abwasser stauen.

Sind derartige Ventile nicht beim Bau der Rohranlage installiert worden, erfordert die nächträgliche Installation umfangreiche Erdarbeiten.

US-A-5 170 986 offenbart eine Rohrabsperreinrichtung, bei der ein mit einem Fluid füllbares Kissen auf einer Seite des Querschnitts der Rohrleitung zusammengelegt ist und durch das Fluid so aufgeblasen werden kann, daß sich das Kissen bis zur gegenüberliegenden Rohrwandung erstreckt und somit den Rohrquerschnitt vollständig absperrt. Eine Halterung für das aufblasbare Kissen ist nicht offenbart.

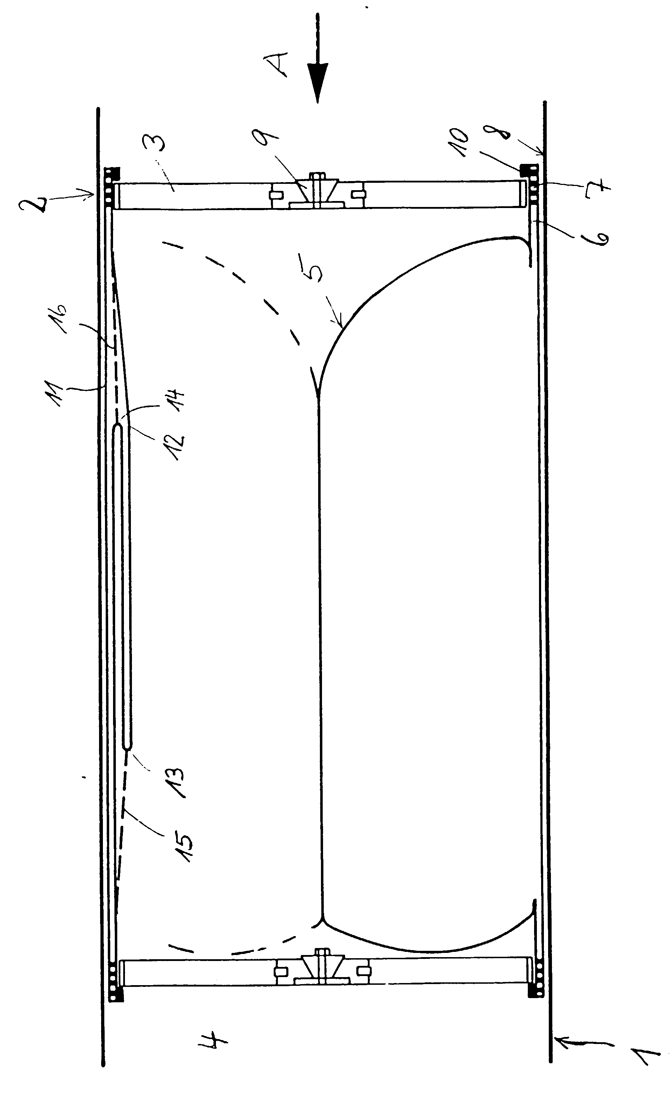

US-A-2 598 207 beschreibt eine ähnliche Absperreinrichtung, bei der ein aufblasbares Kissen aus einem elastischen Material gebildet und ebenfalls an einer Seite des Rohrquerschnitts zusammengelegt angeordnet ist. Im Absperrfall wird das Kissen aufgeblasen und dehnt sich elastisch bis zur gegenüberliegenden Rohrwandseite aus. In dem in Fig. 6 der US-A-2 598 207 gezeigten, den nächstkommenden Stand der Technik bildenden, speziellen Anwendungsfall für eine Rohrleitung, die einen Kern in der Rohrachse aufweist und somit einen ringförmigen Durchflußkanal bildet, ist das Kissen ringförmig an der inneren Umfangswand der Rohrleitung befestigt und dehnt sich im Absperrfall durch Aufblasen bis zum Kern der Rohrleitung aus, um so den ringförmigen Durchflußkanal zu versperren. Eine Faltung einer Innenwand ist nicht beschrieben, das Material des Kissens dehnt sich beim Aufblasen elastisch aus.

DE-A-626 654 offenbart eine Vorrichtung zur Änderung des Querschnitts von Rohrleitungen. Dafür ist ein ringförmiger, flachliegender Schlauch in einer ringförmigen Ausnehmung der Rohrleitungswand befestigt. Durch Aufblasen des aus elastischem Material gebildeten ringförmigen Schlauches dehnt sich dieser in den Rohrquerschnitt aus und führt zu einer Verringerung des freien Strömungsquerschnitts. Ausdrücklich ist diese Vorrichtung nicht zur Absperrung des Rohrquerschnitts vorgesehen oder geeignet.

Der Erfindung liegt die Aufgabe zugrunde, eine Einrichtung der eingangs erwähnten Art anzugeben, die auch bei hohen Drücken eine sichere Abdichtung der Rohrleitung ermöglicht und ggf. auch nachträglich installiert werden kann.

Diese Aufgabe wird erfindungsgemäß mit einer Einrichtung der eingangs erwähnten Art dadurch gelöst, daß das aufblasbare Kissen aus einem beschichteten, unelastischen Gewebe besteht und im nicht aufgeblasenen Zustand als ringförmiger Schlauch mit einer gefalteten Innenwand ausgebildet ist, wobei sich der Schlauch beim Aufblasen erstreckt, bis die Rohrleitung durch die an sich selbst anliegende Innenwand verschlossen ist.

Die erfindungsgemäße Einrichtung besteht im wesentlichen aus dem ringförmig ausgebildeten Schlauch aus einem beschichteten, unelastischen Gewebe. Der Schlauch liegt im nicht aufgeblasenen Zustand im allgemeinen mit seiner Innenwand auf der Außenwand auf, so daß der Schlauch einen nur geringfügig auf der Wand des Rohres auftragenden Ring bildet. In diesem Zustand behindert der Schlauch die normale Strömung in der Rohrleitung kaum. Soll die Rohrleitung verschlossen werden, wird der ringförmige Schlauch beispielsweise mit Druckluft oder mit einem hydraulischen Druck versorgt und dadurch aufgeblasen. Die jeweils innenliegende Wand des ringförmigen Schlauches dehnt sich dabei ringförmig nach innen aus, bis die Innenwand in der Mitte des Rohres ringförmig an sich selbst anliegt und mit dem Innendruck des Kissens die Rohrleitung verschließt. Da der Kissendruck nicht nur nach innen, sondern auch nach außen wirkt, wird die Haftreibung des Kissens an der Wandung der Rohrleitung noch verstärkt, so daß das Kissen einerseits eine gute Abdichtung sowohl zum Innern als auch zur Außenseite des Ringes hin bewirkt, als auch gegen eine Verschiebung unter dem anstehenden Druck in der Rohrleitung gesichert ist. Im nicht aufgeblasenen Zustand ist die Außenwand des Schlauches zur Anlage an der Wandung der Rohrleitung bestimmt und die Innenwand des Schlauches gefaltet. Diese Faltung der Innenwand kann zu einer Mehrlagigkeit in axialer Richtung oder in Umfangsrichtung des Ringes führen.

Um eine möglichst flache, wenig auftragende Ausbildung des aufblasbaren Kissens im nicht aufgeblasenen Zustand zu erreichen, ist es besonders vorteilhaft, wenn das aufblasbare Kissen an der Halterung mit elastischen Befestigungsmitteln gehalten ist, die im nicht aufgeblasenen Zustand die Wand in den gefalteten Zustand ziehen. Bei der Faltung der Innenwand in axialer Richtung sind die elastischen Befestigungsmittel vorzugsweise in den Faltlinien der Innenwand befestigt und üben eine auf Zug gerichtete Vorspannung aus. Dadurch wird die Innenwand in den gefalteten Zustand gezogen, wenn die Befestigungsmittel in axialer Richtung auf beiden Seiten des Kissens an der Halterung angebracht sind.

In einer alternativen Ausführungsform des erfindungsgemäßen aufblasbaren Kissens bildet die Innenwand mit der Außenwand mehrere Kammern in Form von Segmenten, die sich zum Innern des Rohres hin aufwölben können. Im nicht aufgeblasenen Zustand faltet sich die Innenseite der jeweiligen Kammern im Umfangsrichtung, so daß ein flaches Anliegen des ringförmigen Schlauches gewährleistet ist.

Dieses Anliegen des Schlauches wird dadurch unterstützt, daß die Halterung wenigstens einen Spannring aufweist, der mit einer dichtenden Zwischenlage gegen die Wandung des Rohres spannbar ist. Mit einer solchen Halterung ist das erfindungsgemäße aufblasbare Kissen ohne weiteres nachträglich in eine Rohrleitung einsetzbar und stationär festlegbar.

In einer besonders bevorzugten Ausführungsform ist je ein Spannring stromaufwärts und stromabwärts des aufblasbaren Kissens angeordnet. Dabei ist es zweckmäßig, wenn das aufblasbare Kissen mittels wenigstens eines gummielastischen Stückes an dem Spannring befestigt ist.

Die Dichtwirkung des aufblasbaren Kissens zur Rohrwand kann noch dadurch verbessert werden, daß die Außenwand über einen ringförmigen, geschlossenen Dichtstreifen an der Wandung der Rohrleitung anliegt. Dieser Dichtstreifen kann vorzugsweise aus einem geschlossenzelligen Moosgummi gebildet sein.

Die Erfindung wird im folgenden anhand eines in der Zeichnung dargestellten Ausführungsbeispiels näher erläutert.

Die Zeichnung zeigt eine Rohrleitung 1, in der eine Flüssigkeit in Richtung des Pfeiles A strömen kann. In die Rohrleitung ist eine Halterung 2 eingesetzt, die aus zwei zueinander parallelen Spannringen 3, 4 besteht, die sich stromaufwärts bzw. stromabwärts von einem aufblasbaren Kissen 5 befinden, das mittels gummielastischer Stücke 6 mit den Spannringen 3 verbunden ist. Die gummielastischen Stücke 6 gehen über in eine gummielastische, dichtende Zwischenlage 7, die mittels des zugehörigen Spannrings 3, 4 gegen die Wandung 8 der Rohrleitung 1 von innen gedrückt wird. Die Spannringe 3, 4 sind hierzu mit an sich bekannten Spanneinrichtungen 9 versehen mit denen der Durchmesser der Spannringe 3, 4 in Richtung Vergrößerung spannbar ist. Die Zwischenlagen 7 weisen die Spannringe 3,4 hintergreifende Vorsprünge 10 auf und sind so gegen ein Abrutschen gesichert.

In der Zeichung ist in der oberen Hälfte der Rohrleitung das Kissen 5 im nicht aufgeblasenen Zustand, in der unteren Hälfte im aufgeblasenen Zustand dargestellt.

Im nicht aufgeblasenen Zustand liegt das Kissen 5 mit einer Außenwand 11 an der Wandung 8 der Rohrleitung 1 an. Eine Innenwand 12 ist in Längsrichtung des Kissens 5 S-förmig gefaltet und bildet dadurch zwei Faltlinien 13, 14 aus. In diesem nicht aufgeblasenen Zustand liegt das Kissen 5 somit ringförmig an der Wandung 8 der Rohrleitung 1 an. Die Innenwandung 12 wird in einer möglichst flachen Faltung durch elastische Bänder 15, 16 gehalten, die unter Zug gespannt sind und einerseits mit einer Faltlinie 13 bzw. 14 und andererseits mit den gummielastischen Stücken 6 bzw. der Zwischenlage 7 des zugehörigen Spannrings 3, 4 verbunden ist. Die Zugspannung der elastischen Befestigungsmittel 15, 16 zieht die gefaltete Innenwand 12 in eine möglichst flache Ruhelage.

Zum Absperren der Rohrleitung 1 wird Luft oder ein hydraulisches Mittel zwischen die Außenwand 11 und die Innenwand 12 eingeleitet, wodurch die Innenwand 12 in das Rohrinnere hineingedrückt wird. Das hierfür erforderliche zusätzliche Material entsteht durch die Entfaltung der Innenwand 12. Die Ausdehnung der Innenwand 12 wird beim Erreichen der Rohrmitte gestoppt, weil die Innenwände den freien Innenring durch immer weitere Verkleinerung vollständig geschlossen haben und nunmehr unter Druck gegeneinander drücken, wie in der Zeichnung gestrichelt für die obere Hälfte dargestellt ist.

Der gegeneinander wirkende Druck richtet sich auch zur Außenseite, also gegen die Wandung 8 der Rohrleitung 1. Für den Absperrfall sorgt das aufgeblasene Kissen somit für eine eigenständige Fixierung seiner Lage, so daß die Spannringe 3, 4, die zur Lagefixierung im nicht aufgeblasenen Zustand des Kissens 5 dienen, im aufgeblasenen Zustand entlastet werden.

Da die Wände des Kissens 5 nicht dehnbar sind, sondern aus einem beschichteten, nicht elastischen Gewebe bestehen, können sie mit einem hohen Innendruck belastet werden, so daß das aufgeblasene Kissen 5 einem hohen Flüssigkeitsdruck standhalten kann. Das erfindungsgemäße Kissen 5 kann ohne weiteres mit einem Innendruck von 1 bar aufgeblasen werden und hält einem Strömungsdruck von beispielsweise 0,5 bar ohne weiteres stand.

Die Zeichnung läßt erkennen, daß das Kissen 5 nicht aus einem eine einzige Aufblaskammer bildenden ringförmigen Schlauch gebildet sein muß, sondern daß das Kissen auch aus mehreren Aufblaskammern bestehen kann, die sich von der Außenseite zum Innern des Rohres hin auswölben, wobei zweckmäßigerweise der Schnitt der Kammern so ist, daß nach Innen verjüngende Segmente gebildet werden, die möglichst faltenfrei aneinander anliegen und gegeneinander drücken können.

Die erfindungsgemäße Einrichtung ist ohne Beschädigung oder Bearbeitung der Rohrleitung 1 einbringbar und positionierbar. Durch Entspannen der Spannringe 3, 4 können diese in ihrem Durchmesser verkleinert und somit leicht in die Rohrleitung 1 eingeführt werden. Hieraus ergibt sich, daß die Verbindungsstücke 6 elastisch sein sollten, damit durch die Spannung der Spannringe 3, 4 keine Reißspannungen auf das Kissen 5 übertragen werden. Die Zwischenlage 7 muß durch die Spannung der Spannringe 3, 4 im Sinne der Vergrößerung des Durchmessers ebenfalls im Durchmesser vergrößerbar, also elastisch dehnbar sein.

Das Aufblasen des Kissens 5 kann über eine fest installierte Druckluftquelle oder durch tragbare Druckluftquellen erfolgen. Die entsprechende Steuerung kann dabei manuell oder ferngesteuert (pneumatisch, hydraulisch oder elektrisch) erfolgen.

Die erfindungsgemäße Absperreinrichtung ist weitgehend umempfindlich gegen eine Blockierung durch Unrat, Äste, Steine o. dgl.. Herkömmliche mechanische Ventile werden durch diese Störfaktoren leicht blockiert.

Es ist möglich, das erfindungsgemäße Kissen 5 im nicht aufgeblasenen Zustand mit einer Schutzfolie abzudecken, die das Material des Kissens vor aggressiven Medien schützt. Diese Schutzfolie kann beim Aufblasen des Kissens 5 zerreißen, muß also nach einem Einsatzfall neu angebracht werden.

Die Dichtwirkung nach außen kann durch einen in der Zeichnung nicht dargestellten um die Peripherie des Kissens 5 umlaufenden Dichtstreifen, beispielsweise aus einem geschlossenzelligen Moosgummi, erhöht werden.

Die Zuführung der erfindungsgemäßen Einrichtung kann auch durch wesentlich engere Rohrleitungen erfolgen, wenn teilbare Spannringe 3, 4 verwendet werden, wie sie an sich bekannt sind.

Die erfindungsgemäße Absperreinrichtung ist wiederverwendbar und in andere Rohre gleichen Durchmessers problemlos einbaubar. Die erfindungsgemäße Absperreinrichtung ist störunanfällig und aufgrund der Verwendung eines beschichteten Gewebematerials hoch widerstandsfähig.

## Patentansprüche

1. Einrichtung für eine stationäre Montage in einer Rohrleitung (1) zum zumindest flüssigkeitsdichten Absperren der Rohrleitung (1), mit einer Halterung (2) und einem, an der Halterung (2) befestigten aufblasbaren Kissen (5) das im nicht aufgeblasenen Zustand als ringförmiger Schlauch mit einer zur Anlage an der Wandung (8) der Rohrleitung (1) bestimmten Außenwand (11) ausgebildet ist, wobei sich der Schlauch beim Aufblasen ausgehend von der Außenwand, (11) zur Mitte der Rohrleitung (1) hin erstreckt, **dadurch gekennzeichnet, daß** das aufblasbare Kissen (5) aus einem beschichteten, unelastischen Gewebe besteht und im nicht aufgeblasenen Zustand mit einer gefalteten Innenwand (12) ausgebildet ist, wobei sich der Schlauch beim Aufblasen erstreckt bis die Rohrleitung (1) durch die an sich selbst anliegende Innenwand verschlossen ist.

2. Einrichtung nach Anspruch 1, dadurch gekennzeichnet, daß das aufblasbare Kissen (5) an der Halterung (2) mit elastischen Befestigungsmitteln (15, 16) gehalten ist, die im nicht aufgeblasenen Zustand die Wand (12) in den gefalteten Zustand ziehen.

3. Einrichtung nach Anspruch 1 oder 2, dadurch gekennzeichnet, daß die Innenwand (12) des Schlauches in axialer Richtung zu mehreren Lagen gefaltet ist.

4. Einrichtung nach Anspruch 3, dadurch gekennzeichnet, daß die elastischen Befestigungsmittel (15, 16) in Faltlinien (13, 14) der Innenwand befestigt sind und eine auf Zug gerichtete Vorspannung ausüben.

5. Einrichtung nach Anspruch 1 oder 2, dadurch gekennzeichnet, daß die Innenwand (12) mit der Außenwand (11) mehrere Kammern bildet und in Umfangsrichtung gefaltet ist.

6. Einrichtung nach einem der Ansprüche 1 bis 5, dadurch gekennzeichnet, daß die Halterung (2) wenigstens einen Spannring (3, 4) aufweist, der mit einer dichtenden Zwischenlage (7) gegen die Wandung (8) der Rohrleitung (1) spannbar ist.

7. Einrichtung nach Anspruch 6, dadurch gekennzeichnet, daß je ein Spannring (3, 4) stromaufwärts und stromabwärts des aufblasbaren Kissens (5) angeordnet ist.

8. Einrichtung nach Anspruch 6 oder 7, dadurch gekennzeichnet, daß das aufblasbare Kissen (5) mittels wenigstens eines gummielastischen Stückes (6) an einem Spannring (3, 4) befestigt ist.

9. Einrichtung nach einem der Ansprüche 1 bis 8, dadurch gekennzeichnet, daß die Außenwand (11) über einen ringförmigen, geschlossenen Dichtstreifen an der Wandung (8) der Rohrleitung (1) anliegt.

10. Einrichtung nach einem der Ansprüche 1 bis 9, dadurch gekennzeichnet, daß die Innenwand (12) mit einem ringförmigen, geschlossenen Dichtstreifen versehen ist.

11. Einrichtung nach Anspruch 9 oder 10, dadurch gekennzeichnet, daß der Dichtstreifen aus einem weichelastischen, geschlossenzelligen Schaumstoff besteht.

## Claims

1. Device for permanent installation in a pipeline (1) for at least liquid-tight closing of the pipeline (1), with a retention device (2) to which is secured an inflatable cushion (5) which, in the non-inflated state, is in the form of an annular tube with an outer wall (11) for positioning against the wall (8) of the pipeline (1) whereby, on inflation, the tube extends from the outer wall (11) to the centre of the pipeline (1), characterised in that the inflatable cushion (5) comprises a coated, inelastic fabric and, in the non-inflated state, is provided with a folded inner wall (12) whereby, on inflation, the tube expands until the pipeline (1) is closed by the inner wall in contact with itself.

2. Device according to claim 1, characterised in that the inflatable cushion (5) is secured to the retention device (2) with elastic securing elements (15, 16) which, with the cushion in the non-inflated state, retain the tube wall (12) in the folded state.

3. Device according to claim 1 or 2, characterised in that the inner wall (12) of the tube is folded in several layers in the axial direction.

4. Device according to claim 3, characterised in that the elastic securing elements (15, 16) are secured in fold lines (13, 14) of the inner wall, and exert an upward initial tension.

5. Device according to claim 1 or 2, characterised in that the inner wall (12) forms several chambers with the outer wall (11), and is folded in the circumferential direction.

6. Device according to one of the claims 1 to 5, characterised in that the retention device (2) has at least one tension ring (3, 4) which can be tensioned, together with a sealing intermediate layer (7), against the wall (8) of the pipeline (1).

7. Device according to claim 6, characterised in that each tension ring (3, 4) is fitted upstream and downstream of the inflatable cushion (5).

8. Device according to claim 6 or 7, characterised in that the inflatable cushion (5) is secured to a clamping ring (3, 4) by means of at least one rubber elastic component (6).

9. Device according to one of the claims 1 to 8, characterised in that the outer wall (11), by means of a ring-shaped, closed sealing strip, lies against the wall (8) of the pipeline (1).

10. Device according to one of the claims 1 to 9, characterised in that the inner wall (12) is provided with a ring-shaped, closed sealing strip.

11. Device according to claim 9 or 10, characterised in that the sealing strip consists of a soft elastic, closed-cell foam material.

## Revendications

1. Dispositif destiné à un montage permanent dans une conduite tubulaire (1) pour une fermeture au moins étanche aux fluides de la conduite tubulaire (1), comprenant une monture (2) et un coussin gonflable (5) fixé à la monture, lequel coussin est réalisé, à l'état dégonflé, sous la forme d'une gaine annulaire présentant une paroi extérieure (11) destinée à s'appuyer contre la surface (8) de la conduite tubulaire (1), tandis que lors du gonflage la gaine s'étend à partir de la paroi extérieure (11) vers le milieu de la conduite tubulaire (1), caractérisé en ce que le coussin gonflable (5) consiste en un tissu inélastique revêtu, et est réalisé à l'état dégonflé avec une paroi intérieure pliée (12), la gaine s'étendant lors du gonflage jusqu'à ce que la conduite tubulaire (1) soit fermée par la paroi intérieure s'appuyant sur elle même.

2. Dispositif selon la revendication 1, caractérisé en ce que le coussin gonflable (5) est attaché à la monture (2) avec des moyens de fixation élastiques (15, 16), qui à l'état dégonflé tirent la paroi (12) dans l'état plié.

3. Dispositif selon la revendication 1 ou 2, caractérisé en ce que la paroi intérieure (12) de la gaine est pliée en plusieurs couches dans la direction axiale.

4. Dispositif selon la revendication 3, caractérisé en ce que les moyens de fixation élastiques (15, 16) sont fixés dans des lignes de pliage (13, 14) de la paroi intérieure et exercent une précontrainte orientée en traction.

5. Dispositif selon la revendication 1 ou 2, caractérisé en ce que la paroi intérieure (12) constitue plusieurs chambres avec la paroi extérieure (11) et est pliée en direction circonférentielle.

6. Dispositif selon l'une des revendications 1 à 5, caractérisé en ce que la monture (2) présente au moins un anneau de serrage (3, 4) qui peut être serré contre la surface (8) de la conduite tubulaire (1) avec une couche intermédiaire d'étanchéité (7).

7. Dispositif selon la revendication 6, caractérisé en ce qu'il y a un anneau de serrage (3, 4) disposé en amont et respectivement en aval du coussin gonflable (5).

8. Dispositif selon la revendication 6 ou 7, caractérisé en ce que le coussin gonflable (5) est fixé au moyen d'au moins une pièce (6) ayant l'élasticité du caoutchouc à un anneau de serrage (3, 4).

9. Dispositif selon l'une des revendications 1 à 8, caractérisé en ce que la paroi extérieure (11) s'appuie sur la surface (8) de la conduite tubulaire (1) par une bande d'étanchéité annulaire fermée.

10. Dispositif selon l'une des revendications 1 à 9. caractérisé en ce que la paroi intérieure (12) est pourvue d'une bande d'étanchéité annulaire fermée.

11. Dispositif selon la revendication 9 ou 10, caractérisé en ce que la bande d'étanchéité consiste en une mousse à cellules fermées, élastique et souple.
